# FASCICULE DE BREVET EUROPEEN

(11) **EP 0 873 785 B1**
(45) Date de publication et mention de la délivrance du brevet: **02.01.2002**
(21) Numéro de dépôt: 98400846.6
(22) Date de dépôt: 07.04.1998
(51) Int. Cl.: B01J 23/96, B01J 38/20, B01J 38/44, C10G 35/12

(54) **Procédé et installation perfectionnes pour la régénération d'un catalyseur de production d'aromatiques ou de reformage**
Verfahren und verbesserte Vorrichtung für die Regenerierung eines Katalysators für die Herstellung von aromatischen Verbindungen und Reformierung
Process and improved apparatus for regenerating a catalyst for aromatics production or reforming

(30) Priorité: 14.04.1997 FR 9704660
(43) Date de publication de la demande: 28.10.1998
(73) Titulaire: INSTITUT FRANCAIS DU PETROLE, 92500 Rueil Malmaison (FR)
(72) Inventeur: Capelle, Marianne, 69360 Ternay (FR); Deves, Jean-Marie, 78540 Vernouillet (FR); Hoffmann, Frédéric, 78800 Houilles (FR); Thery, Michel, 69390 Vernaison (FR); Brunet, François-Xavier, 69390 Vernaison (FR); Bromet, Emmanuelle, 92500 Rueil Malmaison (FR)

(56) Documents cités:
- EP-A- 0 258 137
- EP-A- 0 378 482
- EP-A- 0 710 502
- FR-A- 2 642 330
- US-A- 4 872 970
- US-A- 5 053 371

## Description

L'invention concerne les procédés en lit mobile pour la production d'hydrocarbures aromatiques, et notamment le reformage. Elle concerne plus particulièrement la régénération du catalyseur usé et est destinée à lui rendre ses performances catalytiques initiales.

Le catalyseur comprend généralement un support (par exemple formé d'au moins un oxyde réfractaire, le support peut également inclure une ou plusieurs zéolites), au moins un métal noble (le platine de préférence), et de préférence au moins un métal promoteur (par exemple l'étain ou le rhénium), au moins un halogène et éventuellement un ou plusieurs éléments additionnels (tels que alcalins, alcalino-terreux, lanthanides, silicium, éléments du groupe IV B, métaux non nobles, éléments du groupe III A, etc.). Les catalyseurs de ce type contiennent, par exemple, du platine et au moins un autre métal déposés sur un support alumine chlorée. D'une manière générale, ces catalyseurs sont utilisés pour la conversion d'hydrocarbures naphténiques ou paraffiniques, susceptibles de se transformer par déshydrocyclisation et/ou déshydrogénation, dans le reformage ou pour la production d'hydrocarbures aromatiques (par exemple production de benzène, toluène, ortho-, méta- ou paraxylènes). Ces hydrocarbures proviennent du fractionnement des pétroles bruts par distillation ou d'autres procédés de transformation.

Ces catalyseurs sont largement décrits dans la littérature.

Un des moyens pour augmenter les rendements de ces procédés de reformage ou de production d'aromatiques, est de diminuer les pressions opératoires auxquelles s'effectuent les différentes réactions intéressantes. Par exemple, il y a 30 ans les réactions de reformage s'effectuaient à 40 bars; il y a 20 ans, à 15 bars. Aujourd'hui, il est courant de voir des réacteurs de reformage fonctionnant à des pressions inférieures à 10 bars, notamment comprises entre 3 et 8 bars.

L'amélioration des réactions bénéfiques due à la baisse de pression s'accompagne d'une désactivation plus rapide du catalyseur par cokage. Le coke, composé de poids moléculaire élevé et constitué essentiellement de carbone et d'hydrogène, se dépose sur les sites actifs du catalyseur. Le rapport molaire H/C du coke formé varie d'environ 0,3 à 1,0. Les atomes de carbone et d'hydrogène forment des structures poly-aromatiques condensées dont le degré d'organisation cristalline est variable en fonction de la nature du catalyseur et des conditions de fonctionnement des réacteurs. Bien que la sélectivité de transformation des hydrocarbures en coke soit très faible, les teneurs en coke accumulé sur le catalyseur peuvent être importantes. Typiquement, pour les unités à lit fixe, ces teneurs sont comprises entre 2,0 et 20,0 à 25,5 % poids. Pour les unités à lit circulant, ces teneurs sont inférieures à 10,0 % poids.

Le dépôt de coke, plus rapide à basse pression, nécessite une régénération également plus rapide du catalyseur. Les cycles de régénération actuels peuvent descendre jusqu'à 2-3 jours.

Le brevet EP-A-0.378.482 de la demanderesse expose un procédé de régénération en continu d'un catalyseur de reformage ou de production d'aromatiques, qui permet de pallier aux inconvénients inhérents à ces cycles de plus en plus courts. Une des étapes de la régénération est l'oxychloration du catalyseur. La présente invention concerne cette étape.

Selon le brevet EP-A-0.378.482, le catalyseur usé chemine progressivement de haut en bas dans une enceinte de régénération où il rencontre successivement une première zone à lit mobile et radiale de combustion, une deuxième zone à lit mobile et radiale de combustion, une zone à lit mobile axiale d'oxychloration et une zone à lit mobile axiale de calcination, et
(a) dans la première zone de combustion, le catalyseur est traité sous une pression de 3 à 8 bars sensiblement égale à celle qui règne dans le premier réacteur de réformage, à une température comprise entre 350 et 450 °C par un gaz de combustion à base d'un gaz inerte circulant à co-courant du catalyseur, renfermant 0,01 à 1 % d'oxygène en volume, ce gaz de combustion provenant d'une zone de lavage des gaz issus de la combustion, de l'oxychloration et de la calcination.
(b) dans la deuxième zone de combustion, le catalyseur est traité sous une pression de 3 à 8 bars sensiblement égale à celle qui règne dans ledit premier réacteur à une température supérieure d'au moins 20 °C à la température qui règne dans la première zone de combustion, en présence des gaz en provenance de la première zone de combustion et en présence d'un gaz inerte d'appoint auquel on ajoute jusqu'à 20 % en volume d'oxygène de façon à ce que le catalyseur soit au contact d'un gaz renfermant 0,01 à 1 % d'oxygène en volume, ces gaz circulant à co-courant du catalyseur.
(c) les gaz de brûlage sont évacués de la deuxième zone de combustion et sont envoyés vers une boucle de lavage après avoir été préalablement mélangés aux gaz soutirés de la zone d'oxychloration et de la zone de calcination.
(d) dans la zone axiale d'oxychloration, le catalyseur est traité à co-courant par un mélange d'un gaz en provenance de la zone de calcination et dudit gaz chloré pendant 30 à 60 mn, le dit mélange formant un gaz d'oxychloration renfermant 4 à 10 % en volume d'oxygène, sous une pression de 3 à 8 bars ; la teneur en eau est de l'ordre de 500-7000 ppm, sans eau ajoutée, elle provient du gaz issu de la combustion, lavé et séché qui est utilisé en partie pour l'oxychloration, mais aussi essentiellement de la calcination.
(e) dans la zone axiale de calcination, le catalyseur est traité pendant 45 à 80 mn à contre-courant entre 350 et 550 °C sous une pression comprise entre 3 et 8 bars, par une partie des gaz en provenance de la boucle de lavage et d'une zone de séchage, ne refermant pas plus de 100 ppm d'eau.

Le brevet EP-710,502 montre la régénération hors site d'un catalyseur. Chaque étape (combustion, oxychloration, calcination) est mise en oeuvre séparement, et par exemple dans un four à lit mobile. L'oxychloration est effectuée en atmosphère d'air humide (0,1-10 % vol. eau) et en présence d'un composé halogéné.

Les inventeurs ont constaté que la maîtrise des conditions opératoires du procédé pourrait être améliorée et il a été recherché une gestion des gaz permettant de contrôler précisément les conditions opératoires des étapes de combution, et également de l'étape de calcination.

Le procédé et le dispositif selon l'invention répondent à ces objectifs.

Plus précisément, le procédé selon l'invention est un procédé de régénération d'un lit mobile de catalyseur de reformage ou de production d'hydrocarbures aromatiques, ledit catalyseur renfermant un support, au moins un métal noble et au moins un halogène, procédé comprenant une étape de combustion avec traitement du catalyseur en lit mobile dans au moins 2 zones de combustion successives, une étape d'oxychloration et une étape de calcination, dans lequel
- chaque zone de combustion est séparée des zones de combustion adjacentes de façon à pouvoir laisser passer le catalyseur et empêcher le passage des gaz,
- dans chaque zone de l'étape de combustion est introduit au moins un gaz contenant de l'oxygène et les gaz produits sont extraits de chaque zone,
- la sévérité des conditions opératoires dans chaque zone de l'étape de combustion s'accroît avec le sens de l'écoulement du catalyseur,
- pour chaque zone de combustion la teneur en oxygène du gaz entrant est comprise entre 0,01-2 %, la température du gaz entrant est comprise entre 350-600 °C, le temps de séjour du catalyseur dans une zone est compris entre 5 min-3h et la PPH est comprise entre 1-50 h⁻¹ et la sévérisation des conditions opératoires est obtenue en augmentant la température et/ou la teneur en oxygène du gaz entrant,
- il est introduit pour l'étape d'oxychloration au moins un agent chlorant, au moins un gaz contenant de l'oxygène, et de l'eau tel que le rapport molaire H20/HCl soit de 1 50, l'étape d'oxychloration se déroule en présence d'un gaz d'oxychloration contenant moins de 21 % d'oxygène et au moins 50 ppm poids de chlore (calculé HCI), et à une température de 350-600 °C.

Le procédé se déroule en lit mobile ou avec des écoulements intermittents du catalyseur (dans ce cas, chaque étape se déroule dans au moins une zone différente, le catalyseur s'écoulant d'une zone à l'autre).

La régénération débute par une étape de combustion de la matière carbonée. Elle est suivie d'une étape d'oxychloration puis d'une étape de calcination.

Les gaz issus de la combustion et les gaz issus de l'oxychloration sont extraits séparément du procédé de régénération, de façon générale. Pour éviter le mélange de ces gaz, il est avantageusement disposé une plaque ou autre moyen pour séparer les zones de combustion et d'oxychloration dans les procédés en lit mobile. Par contre, dans ces procédés en lit mobile, les gaz issus de la calcination peuvent généralement passer librement dans la zone d'oxychloration.

En ce qui concerne l'étape de combustion, elle se déroule dans au moins deux zones consécutives adjacentes et séparées, c'est-à-dire que le catalyseur sortant d'une zone de combustion passe directement dans la zone suivante de combustion, il ne subit pas de traitement entre les deux zones, le gaz extrait d'une zone de combustion est envoyé au moins en partie, et de préférence en totalité, dans la zone suivante (dans le sens de l'écoulement du catalyseur) avec un éventuel appoint d'oxygène (par de l'air par exemple).

Généralement, la sévérisation des conditions opératoires est obtenue en augmentant la température et/ou la teneur en oxygène du gaz entrant. De préférence, pour chaque zone la teneur en oxygène du gaz entrant est comprise entre 0,01-2 %, de préférence 0,5-1,5 % et généralement supérieure à 0,5 %, la température du gaz entrant est comprise entre 350-600°C, de préférence 400-600°C, le temps de séjour du catalyseur dans une zone est compris entre 5 min-3h et la PPH (débit massique horaire du gaz/masse de catalyseur en contact avec le gaz) est compris entre 1-50 h⁻¹.

Avantageusement, l'étape de combustion se termine par une dernière zone dite de contrôle de la fin de la combustion dans laquelle la consommation d'oxygène est inférieure à 10 % de l'oxygène entrant dans ladite zone. La température est de préférence sensiblement constante.

De préférence, la zone de contrôle est située dans la partie inférieure de la dernière zone de combustion, donc après la fin du front de flamme.

De plus, il est introduit généralement dans la zone de contrôle un gaz contenant de l'oxygène en quantité supérieure à celle des gaz entrant aux niveaux en amont (dans le sens de l'écoulement du catalyseur).

On définit ainsi dans la présente invention une combustion en plusieurs zones (ou étages), où chaque étage est caractérisé par une température régnant dans ledit étage, une température d'entrée du gaz contenant l'oxygène, une teneur en oxygène du gaz entrant, un débit de gaz et une durée d'exposition du catalyseur coké à ces conditions, afin d'avoir une combustion plus efficace.

Le catalyseur ayant subi l'étape de combustion est prêt pour être soumis à une étape d'oxychloration. Elle se déroule dans une ou plusieurs zones, de type axial ou radial. Il est introduit dans la zone d'oxychloration au moins un agent chlorant, au moins un gaz contenant de l'oxygène, et de l'eau. L'agent chlorant peut être du chlore, HCI, ou un hydrocarbure halogéné contenant moins de 4 atomes de carbone, et de 1 à 6 atomes de chlore (par exemple CCl₄) ou tout agent chlorant connu dans ces procédés de régénération pour libérer du chlore. Il est introduit de préférence avec le gaz contenant de l'oxygène. On l'introduira avantageusement dans la partie inférieure de la zone d'oxychloration pour qu'il s'écoule à contre-courant du catalyseur, lorsque la zone d'oxychloration est axiale.

La quantité d'agent chlorant introduit est telle que la concentration en chlore (calculé HCI) dans le gaz au contact du catalyseur dans la zone d'oxychloration appelé gaz d'oxychloration (c'est-à-dire pour les procédés en lit mobile le gaz introduit dans la zone d'oxychloration + le gaz en provenance de la zone de calcination) soit d'au moins 50 ppm poids, en général de 50-8000 ppm poids, avantageusement supérieure à 650 ppm poids, et de façon préférée comprise entre 1000 et 8000 ppm poids. On préférera également, pour des raisons technologiques, (liées à la corrosion par exemple ou au traitement ultérieur des gaz chlorés), travailler à des teneurs ne dépassant pas 4000 ou 5000 ppm poids.

Il est également introduit dans la zone d'oxychloration au moins un gaz contenant de l'oxygène. Avantageusement, ce gaz comprend une partie des gaz issus de l'étape de combustion, lavée et séchée de préférence, additionnée d'un appoint en oxygène, par de l'air par exemple. Dans les procédés à lit mobile avec zone axiale d'oxychloration, ce gaz circule de préférence à contre-courant du catalyseur.

Le catalyseur est dans la zone d'oxychloration au contact du gaz ainsi introduit et au contact également du gaz en provenance de la zone de calcination, chargé encore en oxygène et contenant un peu d'eau résultant de la calcination. La teneur en oxygène du gaz d'oxychloration est inférieure à 21 % (volume). Elle est généralement au dessus de 10 % volume.

On observera que selon l'invention, dans une réalisation préférée des procédés en lit mobile, et contrairement à l'art antérieur EP- 0 378 482, il est introduit dans l'étape d'oxychloration (la zone d'oxychloration axiale par exemple) au moins un gaz contenant de l'oxygène, indépendamment du gaz contenant de l'oxygène introduit dans l'étape de calcination (la zone de calcination axiale par exemple).

Il peut également être envisagé sans sortir de l'invention, de n'introduire dans l'étape d'oxychloration que l'agent chlorant et l'eau, la bonne répartition du chlore et de l'eau étant alors plus délicate à obtenir, le gaz contenant de l'oxygène provenant alors uniquement de la zone de calcination.

De façon nouvelle par rapport au brevet EP-0 378 482, de l'eau est introduite dans l'étape d'oxychloration. Elle est avantageusement amenée en mélange avec le gaz contenant de l'oxygène introduit.

La quantité d'eau ainsi introduite est dans le rapport molaire H₂O/HCl de 1 à 50, généralement ce rapport est d'au moins 3, et de préférence il est de 4 à 50, ou de 4 à 30, avantageusement de 7 à 50, et plus préférentiellement de 7 à 30. L'eau est amenée sous forme liquide ou de préférence sous forme vapeur.

Le gaz d'oxychloration est ainsi très chargé en eau, et sa teneur en eau est supérieure à 7000 ppm, et généralement elle est d'au moins 8000 ppm voire 10000 ppm poids, et de préférence supérieure à 10000 ppm poids.

La redispersion du métal noble est obtenue en présence d'oxygène, de chlore et d'eau dans les conditions énoncées, et à des températures dans l'étape d'oxychloration de 350-600 °C, de préférence 350-550 °C, mais le plus souvent d'au moins 450 °C, et préférentiellement entre 490 et 530 °C. Le temps de séjour du catalyseur dans l'étape d'oxychloration est inférieur souvent à 2 h et il s'établit généralement entre 45 mn et 2 h.

La pression régnant dans cette zone doit être équilibrée avec les pressions des zones adjacentes dans le cas de circulation de catalyseur, et à 3-8 bars pour les procédés en lit mobile de régénération de catalyseur fonctionnant dans des procédés de reformage à faible pression.

Dans les procédés en lit mobile, le gaz d'oxychloration contient également du gaz en provenance de la zone de calcination ; dans cette zone de calcination, il est introduit un gaz contenant de l'oxygène et moins de 1 % mole d'eau et de préférence moins de 0,1 % d'eau et mieux au moins de 0,05 % d'eau. Généralement la teneur en eau sera inférieure à 150 ppm mole, mieux inférieure à 100 ppm mole et avantageusement inférieure à 50 ppm mole. Le gaz contenant de l'oxygène peut être de l'air. De façon avantageuse, ce gaz comprend une partie du gaz issu de l'étape de combustion, lavé et séché, et additionné d'un appoint d'oxygène (air). Dans ce cas avantageux, la teneur en oxygène du gaz introduit pour l'étape de calcination est inférieure à 21 % volume. D'une façon générale, la teneur en oxygène du gaz introduit pour l'étape de calcination est d'au plus 21 % volume.

La température de l'étape de calcination est comprise, de façon connue, entre 350 et 600 °C, et de préférence 350-550 °C. Le gaz contenant de l'oxygène circule à contre-courant du catalyseur dans les procédés à lit mobile avec zone de calcination axiale. Généralement, le temps de séjour est inférieur à 1 h.

Afin de pouvoir contrôler strictement les conditions opératoires dans la zone d'oxychloration, on opère de préférence sans recyclage des gaz d'oxychloration.

L'absence de recyclage permet également un contrôle plus précis du taux d'oxygène, et permet d'atteindre des teneurs élevées en oxygène (absence de dilution) de façon économique.

Mais des modes de réalisation peuvent inclure le recyclage.

En l'absence de recyclage (cas préféré), le gaz d'oxychloration (ou la purge de ce gaz s'il y a recyclage) sortant de la zone d'oxychloration est rejeté hors de l'installation (dans l'atmosphère par exemple) après traitement pour éliminer au moins les impuretés chlorées.

On a également intérêt à sécher le gaz issu de la combustion amené dans la zone d'oxychloration, lorsque cela est le cas, de façon à maîtriser la quantité d'eau présente dans le gaz d'oxychloration à partir de la quantité d'eau ajoutée. Ce séchage peut être effectué sur le gaz extrait de la combustion avant son fractionnement pour amener une partie en zone d'oxychloration, ou bien sur la partie fractionnée. L'air est également de préférence séché.

Dans les conditions du procédé selon l'invention, il est obtenu une amélioration notable de la redispersion de la phase métallique du catalyseur, par rapport à l'art antérieur.

L'état de dispersion de la phase métallique du catalyseur est déterminée quantitativement par la technique de chimisorption H₂/O₂.

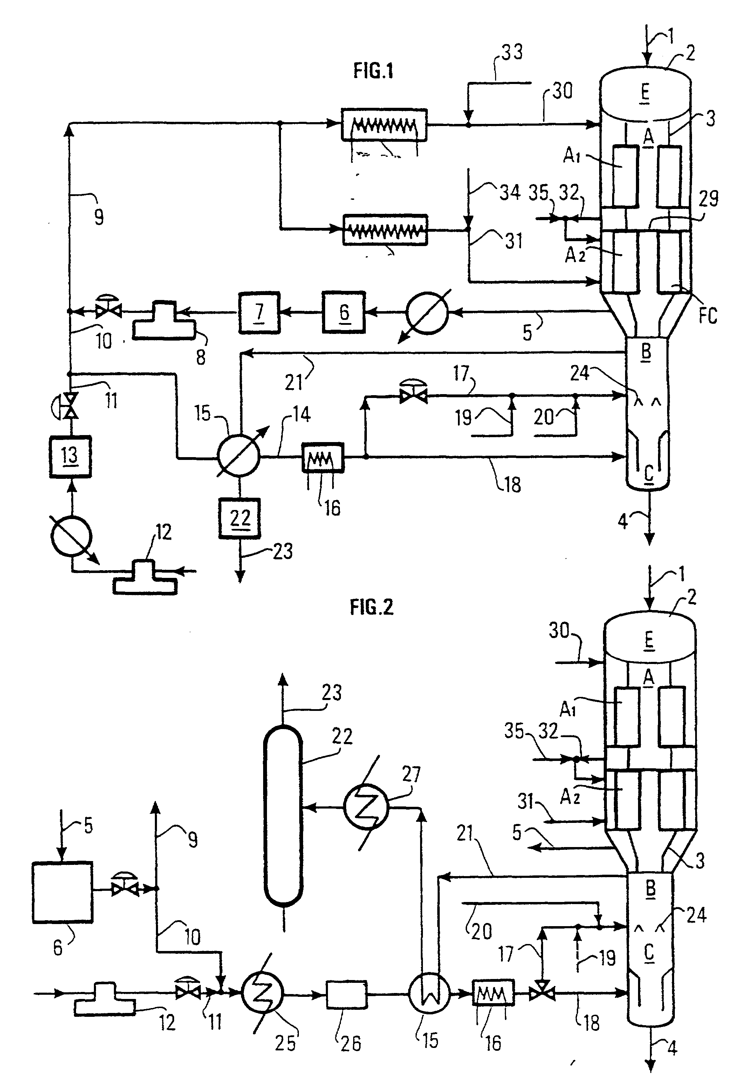

Le procédé sera mieux compris à partir de la description de la figure 1 qui montre l'installation objet de l'invention.

L'invention a également pour objet une installation pour la régénération de catalyseur de reformage ou de réduction d'aromatiques renfermant un support, au moins un métal noble et au moins un halogène, au moins une conduite d'entrée (1) et une conduite (4) de sortie du catalyseur de l'enceinte, ledit catalyseur sous forme de lit mobile traversant successivement des zones de combustion, oxychloration et calcination, ladite enceinte comportant:
- au moins deux zones de combustion (A1, A2) radiales disposées en série, et entre les zones de combustion sont disposés des moyens de séparation permettant le passage du catalyseur entre lesdites zones dans les conduites à cet effet mais empêchant le passage des gaz entre lesdites zones,
- une zone (FC) de contrôle de la fin de la combustion située dans la partie inférieure de la dernière zone de combustion,
- au moins une conduite (30) pour l'introduction de gaz contenant de l'oxygène dans la première zone de combustion, au moins une conduite (32) pour l'évacuation des gaz d'une zone de combustion et pour leur introduction dans la zone de combustion suivante, au moins une conduite (31) pour l'introduction de gaz contenant de l'oxygène dans la zone de contrôle,
- au moins une conduite (5) pour l'évacuation des gaz issus de l'étape de combustion en dehors de l'enceinte, ladite conduite étant située avant la zone d'oxychloration, et l'enceinte comportant au moins un moyen pour le refroidissement desdits gaz, au moins un moyen de traitement desdits gaz pour éliminer les impuretés, au moins un moyen pour le séchage des gaz, et au moins un moyen pour leur compression,
- au moins une conduite (9) pour évacuer une partie des gaz issus de la combustion comprimés et reliés aux conduites (30) et (31),
- au moins une conduite (10) pour évacuer l'autre partie des gaz issus de la combustion comprimés sur ladite conduite est disposé au moins un moyen de chauffage (16) des gaz, et ladite conduite est reliée à au moins une conduite (17) qui amène une partie au moins desdits gaz dans la zone d'oxychloration, ladite conduite (17) étant reliée à au moins une conduite (20) pour l'introduction d'eau et au moins une conduite (19) pour l'introduction d'agent chlorant,
- au moins une conduite (18) pour l'introduction d'un gaz contenant de l'oxygène dans la zone de calcination,
- au moins une conduite (21) pour évacuer les gaz issus de la zone d'oxychloration comportant au moins un moyen (22) de traitement desdits gaz avant leur évacuation hors de l'installation.

Avantageusement, la conduite (9) comporte au moins un moyen de chauffage du gaz amené dans la zone de contrôle.

Avantageusement, sur chaque conduite (30) et (31) est disposé au moins un moyen de chauffage (36,37) du gaz.

Avantageusement, la conduite (5) comporte au moins un moyen de refroidissement, suivi d'au moins un sécheur, puis d'au moins un moyen de compression.

La gestion globale des gaz au niveau de l'enceinte assure un fonctionnement combiné optimisés des zones de combustion, oxychloration, calcination.

Ainsi les gaz issus de l'étape de combustion sont refroidis, traités pour éliminer les impuretés, séchés, comprimés puis fractionnés en deux flux ; le premier flux est, après apport d'oxygène et éventuel réchauffage envoyé dans la première zone de combustion, le second flux est, après apport d'oxygène, d'eau et d'agent chlorant, et après chauffage, envoyé à l'étape d'oxychloration, les gaz issus de l'oxychloration étant traités et évacués hors de l'installation.

Dans le cas de la figure 1 à deux zones de combustions, les zones sont séparées de façon à laisser passer le catalyseur et empêcher le passage des gaz, la seconde zone de combustion comportant dans sa partie inférieure une zone de contrôle de la fin de la combustion, et le gaz extrait de la première zone de combustion est envoyé en totalité dans la seconde zone de combustion après appoint d'oxygène, le gaz issu de la seconde zone de combustion est refroidi, traité pour éliminer les impuretés, purgé, séché, comprimé puis séparé en deux flux ; le premier flux est introduit après apport d'oxygène, dans la première zone de combustion et après éventuel réchauffage dans la zone de contrôle ; le second flux est additionné d'un gaz sec contenant de l'oxygène réchauffé et envoyé en zone d'oxychloration après addition d'eau et d'agent chlorant.

Selon un mode de réalisation, le premier flux est séparé en deux fractions, l'une étant introduite après apport d'oxygène dans la première zone de combustion, l'autre étant additionnée d'oxygène, réchauffée et introduite dans la zone de contrôle.

Dans un autre mode de réalisation , le premier flux est séparé en deux fractions, chacune étant additionnée d'oxygène et réchauffée avant introduction, pour l'une dans la première zone de combustion, et pour l'autre dans la zone de contrôle.

Par ailleurs, selon une réalisation, le second flux réchauffé est séparé en deux fractions, l'une étant envoyée en zone d'oxychloration après addition d'eau et d'agent chlorant, l'autre étant envoyée en zone de calcination.

On pourrait également dans un autre mode de réalisation, réchauffer les deux fractions issues du premier flux ou seulement la fraction qui est introduite en zone de contrôle.

De façon classique le catalyseur usé à régénérer entre dans le sommet (2) de l'enceinte E de régénération par la conduite (1).

Le catalyseur est introduit ensuite par des conduites ou jambes (3) dans une première zone de combustion A1. Dans cette zone le catalyseur subit un premier brûlage ou combustion à l'aide d'un gaz contenant de l'oxygène introduit par la conduite (30).

De façon générale, les zones de combustion sont de type radial, et de préférence annulaire, le lit s'écoule alors dans l'espace annulaire délimité par deux parois cylindriques coaxiales, le gaz entrant par une paroi et sortant par l'autre.

Le gaz après passage dans cette première zone de combustion est extrait de ladite zone par la conduite (32), et il est réintroduit en partie au moins, et de préférence en totalité, dans la seconde zone de combustion A2, dans laquelle s'écoule le catalyseur.

D'une façon générale, le gaz extrait d'une zone de combustion est réintroduit au moins en partie, et de préférence en totalité, dans la zone de combustion suivante.

Un appoint d'oxygène a lieu si besoin, et ce par une conduite (35). Cette disposition permet une utilisation maximum de l'oxygène restant et un apport d'oxygène minimum.

Selon l'invention, les zones de combustion A1 et A2 sont physiquement séparées de façon à laisser passer le catalyseur mais en empêchant le passage des gaz, par exemple le passage direct des gaz de A1 vers A2.

L'homme du métier choisira le moyen le plus adapté pour remplir cette fonction. Dans le mode de réalisation figure 1, une plaque (29) est disposée à cet effet entre les zones A1 et A2 sur toute la section de l'enceinte E de régénération, à l'exception des sections réservées au passage du catalyseur (jambes ou autres conduites). Certes, un peu de gaz passe dans la zone A2 avec le catalyseur dans les jambes, mais c'est une mineure partie du gaz.

Le gaz après passage dans cette seconde zone de combustion est extrait de ladite zone par la conduite (5).

Cette gestion séparée des gaz au niveau de chaque zone de combustion permet de connaître précisément à tout moment les températures des gaz entrant et sortant et leurs quantités d'oxygène. Outre une utilisation maximum de l'oxygène, cette gestion permet une maîtrise de la combustion du coke par la maîtrise des conditions opératoires au niveau de chaque zone.

On procède à une opération de contrôle de fin de la combustion dans une dernière zone de l'étape de combustion.

Dans la réalisation de la figure 1, cette opération est effectuée dans la partie inférieure (dans le sens de l'écoulement du catalyseur) de la dernière zone de combustion A2, cette partie inférieure constitue alors une zone FC dite de contrôle.

Dans une autre réalisation non représentée, la zone FC de contrôle est une zone non incluse dans la dernière zone de combustion A2.

La zone FC de contrôle se distingue d'une zone de combustion en ce que la consommation d'oxygène est dans la zone FC approximativement inférieure à 10 % de l'oxygène entrant. Avantageusement, la température qui y règne reste sensiblement constante (variation de 3% maximum et mieux de 2 % maximum) aux erreurs de mesure près et aux déperditions thermiques près.

Il entre dans cette zone FC un gaz contenant de l'oxygène par la conduite (31), l'oxygène étant amené par la conduite (34), gaz qui est extrait après son passage à travers la zone FC par la conduite (5) par laquelle s'effectue également l'évacuation du gaz ayant traversé la dernière zone de combustion A2.

L'homme du métier choisira les moyens adaptés pour mesurer la consommation d'oxygène dans la zone FC. Par exemple, on peut mesurer la variation de la teneur en oxygène entre l'entrée et la sortie de la zone FC à partir d'une variation de la teneur à l'entrée (au même débit total de gaz) et la mesure de la variation de la teneur en sortie de zone. D'une façon générale, si le fonctionnement des étages précédents est correct, la consommation en oxygène dans la zone FC doit être faible (inférieure à 2-3 %).

Un autre moyen est de disposer de moyens de mesure de la température et/ou de la teneur en oxygène soit sur le gaz sortant (par exemple dans le cas où le gaz sort indépendamment des autres gaz issus de la combustion) soit au niveau de la paroi par laquelle sort le gaz de la zone FC.

On peut également adapter des moyens pour mesurer la température du lit catalytique ou du catalyseur entrant et sortant de la zone de contrôle.

On dispose ainsi d'un moyen simple pour contrôler le bon fonctionnement des étages de combustion, et par la gestion indépendante des gaz de chaque étage, on peut rapidement et facilement remédier aux déficits de combustion en faisant varier la température ou le taux d'oxygène dans une ou plusieurs zones.

En effet, si la comparaison des teneurs en oxygène ou des températures sur gaz et/ou catalyseur conduit à des variations en dehors des valeurs admissibles pour le procédé (moins de 10 % pour l'oxygène et au plus 3 % pour la température) alors au moins une condition opératoire d'au moins une zone de combustion est modifiée de façon à corriger la différence. Ce peut être par modification de la teneur en oxygène et/ou de la température du gaz entrant).

Les conditions opératoires sont choisies pour chaque zone et strictement contrôlées au niveau de chaque zone (contrairement à l'art antérieur) de façon à réduire autant que possible l'effet néfaste de la combustion sur le catalyseur.

Chaque étage (zone) reçoit au moins un gaz contenant de l'oxygène à
- une PPH comprise entre 1 et 50 h⁻¹, et de préférence 10-40 h⁻¹, et plus préféré 15-35 h⁻¹,
- une température T comprise entre 350 et 600 °C, de préférence 400° et 600°C,
- une teneur en oxygène 02, d'au plus 2 %, et de préférence 0,5-1,5 %,
- chaque zone a un volume V correspondant à un temps de séjour du catalyseur de 5 min à 3 h.

.Pour chaque zone, la température d'entrée du gaz contenant de l'oxygène et la teneur en oxygène sont telles que :
- la température maximale en sortie de lit est inférieure à une valeur maximale admissible, fonction des matériaux utilisés (par exemple, 770 °C pour un acier faiblement allié),
- l'élévation maximale de température entre entrée et sortie du lit est inférieure à 200 °C de préférence de l'ordre de 100 °C,
- la température dans la zone est d'au moins 350°C, avantageusement d'au moins 400 °C et inférieure à 600 °C, de préférence inférieure à 580 °C et mieux d'au plus 550 °C,
- la température dans la zone est supérieure à la température de la zone qui la précède immédiatement. Ainsi dans la zone A2, la température T2 est supérieure à T1 de la zone A1. Ces températures de plus en plus élevées résultent du transfert du catalyseur chaud de la zone précédente, de l'introduction du gaz chaud contenant de l'oxygène et de la réaction exothermique de combustion qui se développe, et de la sévérité croissante des conditions opératoires.

De préférence, pour garantir le bon fonctionnement de la combustion, on introduit des gaz de plus en plus chauds au niveau des zones rencontrées lors de l'écoulement du catalyseur. Ainsi la température T2 du gaz entrant en deuxième zone sera avantageusement supérieure à celle T1 du gaz entrant en première zone, et T3 sera supérieure à T2 (T3 : température de la zone de contrôle).

Plus précisément, il entre dans la zone FC un gaz ayant une température au moins sensiblement égale à celle régnant à la fin de la combustion de la dernière zone de combustion.
- la teneur en oxygène du gaz introduit est également de plus en plus grande au niveau des zones rencontrées par le catalyseur, et la zone de contrôle correspond à la teneur en oxygène la plus forte (quantité supérieure à celle des gaz entrant aux niveaux en amont).

Après avoir subi la combustion, le catalyseur à faible teneur en matière carbonée arrive dans la zone d'oxychloration (B) en passant dans des conduites ou jambes. Puis il s'écoule vers la zone de calcination (C) et ressort de l'enceinte par les conduites (4).

La figure 1 montre une zone d'oxychloration et une zone de calcination, plusieurs sont possible. Ces zones sont très avantageusement de type axial.

Entre les zones d'une part de combustion et d'autre part d'oxychloration, on peut avantageusement disposer une plaque ou tout autre moyen de séparation des zones permettant de laisser passer le catalyseur mais pas les gaz.

Par contre, les gaz circulent librement de la zone de calcination vers la zone d'oxychloration. En fait, sur la figure 1, on a un seul lit de catalyseur pour la calcination et l'oxychloration. L'invention peut employer des lits distincts avec circulation des gaz et du catalyseur.

Les gaz issus de la combustion sont évacués par au moins une conduite (5) qui débouche dans la zone (6) de traitement pour éliminer les impuretés, par exemple lavage. Après passage dans un sécheur (7) et dans un compresseur (8), les gaz sont divisés en deux flux. Le premier flux est recyclé par la conduite (9) dans la zone de combustion (A) après appoint d'oxygène par la conduite (33) et éventuel réchauffage, tandis que l'autre flux passe par la conduite (10).

Un appoint en oxygène sec (sécheur 13 précédé d'un refroidisseur) est additionné au second flux de gaz dans la conduite (10) par l'intermédiaire d'une conduite (11) reliée à un compresseur (12) qui assure un débit d'air par exemple, réglé grâce par exemple à une vanne, en fonction du taux d'oxygène requis dans le gaz. Il est obtenu dans la conduite (14) un gaz contenant de l'oxygène. Le gaz est avantageusement préchauffé dans l'échangeur (15), avant de passer dans un four (16) (ou tout autre moyen de chauffage).

Selon la réalisation de la figure 1, une partie de ce gaz alimente directement la zone d'oxychloration par la conduite (17), tandis que l'autre partie alimentera la zone de calcination par la conduite (18). L'injection du gaz dans la zone d'oxychloration se fait après avoir ajouté une quantité contrôlée de vapeur d'eau par au moins une conduite (19) et une quantité contrôlée d'agent chlorant par au moins une conduite (20).

Les conduites (17) et (18) arrivent dans la partie inférieure de chacune des zones axiales de façon à produire un contre-courant gaz-solide. Au niveau de la conduite (17), on dispose avantageusement dans le lit catalytique au moins un déflecteur (24) pour une bonne répartition des gaz. Le gaz est évacué de la zone d'oxychloration par la conduite (21), passe avantageusement dans l'échangeur (15), avant d'être acheminé dans une zone de lavage (22). Le gaz lavé peut être ensuite rejeté à l'atmosphère par la conduite (23) ou de façon plus générale évacué hors de l'installation.

D'une façon préférée, on dispose une conduite (18) reliée à la conduite (14) pour amener le gaz contenant de l'oxygène dans la zone de calcination, de préférence la conduite (18) est placée après le four (16). On observera que dans le cas de la figure 1, les gaz introduits par les conduites (17) et (18) ont sensiblement la même teneur en oxygène.

Le mode de réalisation figure 1 correspond à une gestion optimisée des gaz avec utilisation des gaz issus de la combustion en zone de calcination. On aurait pu tout aussi bien amener de l'air séché et réchauffé directement dans la zone de calcination c'est-à-dire sans fractionner le gaz réchauffé dans le four (16). Ce gaz est donc au moins en partie envoyé dans la zone d'oxychloration.

Un autre mode de réalisation est présenté figure 2 qui se distingue de celui de la figure 1 par les équipements placés sur les conduites (sécheurs, fours, échangeurs...).

Cette figure est donnée pour illustrer la possibilité de faire varier les agencements d'équipements et de conduites dans le cadre de l'invention.

On reconnaît la conduite (5) d'évacuation des gaz issus de la combustion qui débouche sur un ballon de lavage (6). Après lavage, le gaz est fractionné en une partie qui retourne à la zone de combustion par une conduite (9), les équipements sur cette conduite ne sont pas représentés. L'autre partie évacuée par la conduite (10) est additionnée d'oxygène (air) comprimé (compresseur (12) amené par la conduite (11).

Le gaz chargé en oxygène passe dans un échangeur (25), un sécheur (26), un échangeur (15) et un four (16). Après réchauffage, le gaz est divisé en un flux partant par une conduite (17) vers la zone d'oxychloration avec ajout d'agent chlorant par la conduite (19) et d'eau par la conduite (20). L'autre flux va par la conduite (18) vers la zone de calcination.

L'effluent issu de l'oxychloration est évacué par la conduite (21), passe dans l'échangeur (15), un refroidisseur (27), un ballon de lavage (22) et est envoyé à l'atmosphère par la conduite (23).

On notera que les réalisations présentées se font sans boucle de recyclage des gaz d'oxychloration.

## Revendications

1. Procédé de régénération d'un lit mobile de catalyseur de reformage ou de production d'hydrocarbures aromatiques, ledit catalyseur renfermant un support, au moins un métal noble et au moins un halogène, procédé comprenant une étape de combustion avec traitement du catalyseur en lit mobile dans au moins 2 zones de combustion successives, une étape d'oxychloration et une étape de calcination, dans lequel
- chaque zone de combustion est séparée des zones de combustion adjacentes de façon à pouvoir laisser passer le catalyseur et empêcher le passage des gaz,
- dans chaque zone de l'étape de combustion est introduit au moins un gaz contenant de l'oxygène et les gaz produits sont extraits de chaque zone,
- la sévérité des conditions opératoires dans chaque zone de l'étape de combustion s'accroît avec le sens de l'écoulement du catalyseur,
- pour chaque zone de combustion la teneur en oxygène du gaz entrant est comprise entre 0,01-2 %, la température du gaz entrant est comprise entre 350-600 °C, le temps de séjour du catalyseur dans une zone est compris entre 5 min-3h et la PPH est comprise entre 1-50 h⁻¹ et la sévérisation des conditions opératoires est obtenue en augmentant la température et/ou la teneur en oxygène du gaz entrant,
- il est introduit pour l'étape d'oxychloration au moins un agent chlorant, au moins un gaz contenant de l'oxygène, et de l'eau tel que le rapport molaire H20/HCl soit de 1 à 50, l'étape d'oxychloration se déroule en présence d'un gaz d'oxychloration contenant moins de 21 % d'oxygène et au moins 50 ppm poids de chlore (calculé HCI), et à une température de 350-600 °C.

2. Procédé selon la revendication 1 dans lequel pour chaque zone de combustion, la température du gaz entrant est de 400-600°C.

3. Procédé selon l'une des revendications précédentes dans lequel le rapport H₂O/Hcl est de 3-50,

4. Procédé selon l'une des revendications précédentes, dans lequel le gaz extrait d'une zone de combustion est envoyé au moins en partie dans la zone suivante (dans le sens de l'écoulement du catalyseur) avec un éventuel appoint d'oxygène.

5. Procédé selon l'une des revendications précédentes, dans lequel le gaz extrait d'une zone de combustion est envoyé en totalité dans la zone suivante avec un éventuel apport d'oxygène.

6. Procédé selon l'une des revendications précédentes, dans lequel l'étape de combustion se termine dans une dernière zone dite de contrôle de fin de la combustion dans laquelle la consommation d'oxygène est approximativement inférieure à 10 % de l'oxygène entrant dans ladite zone.

7. Procédé selon l"une des revendications précédentes dans lequel le gaz introduit dans la zone d'oxychloration contient au moins un agent chlorant, de l'eau et au moins un gaz contenant de l'oxygène qui comprend une partie des gaz issus de l'étape de combustion, lavée. éventuellement séchée, additionnée d'un appoint d'oxygène.

8. Procédé selon l'une des revendications précédentes, dans lequel les gaz issus de l'étape de combustion sont refroidis, traités pour éliminer les impuretés; séchés, comprimés puis fractionnés en deux flux ; le premier flux est, après apport d'oxygène et éventuel réchauffage envoyé dans la première zone de combustion, le second flux est, après apport d'oxygène, d'eau et d'agent chlorant, et après chauffage, envoyé à l'étape d'oxychloration, les gaz issus de l'oxychloration étant traités et évacués hors de l'installation.

9. Procédé selon l'une des revendications précédentes comprenant une étape de combustion avec traitement du catalyseur dans une première zone de combustion puis une seconde zone de combustion, dans lequel les zones sont séparées de façon à laisser passer le catalyseur et empêcher le passage des gaz, la seconde zone de combustion comportant dans sa partie inférieure une zone de contrôle de la fin de la combustion, et le gaz extrait de la première zone de combustion est envoyé en totalité dans la seconde zone de combustion après appoint d'oxygène, le gaz issu de la seconde zone de combustion est refroidi, traité pour éliminer les impuretés, purgé, séché, comprimé puis séparé en deux flux ; le premier flux est introduit après apport d'oxygène, dans la première zone de combustion et après éventuel réchauffage dans la zone de contrôle; le second flux est additionné d'un gaz sec contenant de l'oxygène réchauffé et envoyé en zone d'oxychloration après addition d'eau et d'agent chlorant.

10. Procédé selon la revendication 9, dans lequel le premier flux est séparé en deux fractions, l'une étant introduite après apport d'oxygène dans la première zone de combustion, l'autre étant additionnée d'oxygène, réchauffée et introduite dans la zone de contrôle.

11. Procédé selon la revendication 9, dans lequel le premier flux est séparé en deux fractions, chacune étant additionnée d'oxygène et réchauffée avant introduction, pour l'une dans la première zone de combustion, et pour l'autre dans la zone de contrôle.

12. Procédé selon l'une des revendications 7 à 11, dans lequel le second flux réchauffé est séparé en deux fractions, l'une étant envoyée en zone d'oxychloration après addition d'eau et d'agent chlorant, l'autre étant envoyée en zone de calcination.

13. Procédé selon l'une des revendications précédentes, dans lequel la température est sensiblement constante dans la zone de contrôle.

14. Procédé selon l'une des revendications précédentes, dans lequel les gaz issus de la combustion et les gaz issus de l'oxychloration sont extraits séparément.

15. Procédé selon les revendications précédentes, dans lequel le procédé opère en l'absence de recyclage du gaz d'oxychloration.

16. Procédé selon l'une des revendications précédentes, dans lequel le gaz est amené pour l'oxychloration est introduit dans la partie inférieure de la zone d'oxychloration.

17. Procédé selon l'une des revendications précédentes, dans lequel l'étape de calcination se déroule en présence d'un gaz contenant au plus 21 % d 'oxygène et moins de 1 % d'eau.

18. Procédé selon l'une des revendications précédentes, dans lequel il est introduit dans la zone de calcination un gaz contenant de l'oxygène et moins de 1% mole d'eau, qui comprend une partie du gaz issu de l'étape de combustion, lavé et séché et additionné d'un appoint d'oxygène.

19. Installation pour la régénération de catalyseur de reformage ou de réduction d'aromatiques renfermant un support, au moins un métal noble et au moins un halogène, au moins une conduite d'entrée et une conduite (4) de sortie du catalyseur de l'enceinte, ledit catalyseur sous forme de lit mobile traversant successivement des zones de combustion, oxychloration et calcination, ladite enceinte comportant :
- au moins deux zones de combustion (A1, A2) radiales disposées en série, et entre les zones de combustion sont disposés des moyens de séparation permettant le passage du catalyseur entre lesdites zones dans les conduites à cet effet mais empêchant le passage des gaz entre lesdites zones,
- une zone (FC) de contrôle de la fin de la combustion située dans la partie inférieure de la dernière zone de combustion,
- au moins une conduite (30) pour l'introduction de gaz contenant de l'oxygène dans la première zone de combustion, au moins une conduite (32) pour l'évacuation des gaz d'une zone de combustion et pour leur introduction dans la zone de combustion suivante, au moins une conduite (31) pour l'introduction de gaz contenant de l'oxygène dans la zone de contrôle,
- au moins une conduite (5) pour l'évacuation des gaz issus de l'étape de combustion en dehors de l'enceinte, ladite conduite étant située avant la zone d'oxychloration, et l'enceinte comportant au moins un moyen pour le refroidissement desdits gaz, au moins un moyen de traitement desdits gaz pour éliminer les impuretés, au moins un moyen pour le séchage des gaz, et au moins un moyen pour leur compression,
- au moins une conduite (9) pour évacuer une partie des gaz issus de la combustion compnmés et reliés aux conduites (30) et (31),
- au moins une conduite (10) pour évacuer l'autre partie des gaz issus de la combustion comprimés sur ladite conduite est disposé au moins un moyen de chauffage (16) des gaz, et ladite conduite est reliée à au moins une conduite (17) qui amène une partie au moins desdits gaz dans la zone d'oxychloration, ladite conduite (17) étant reliée à au moins une conduite (20) pour l'introduction d'eau et au moins une conduite (19) pour l'introduction d'agent chlorant,
- au moins une conduite (18) pour l'introduction d'un gaz contenant de l'oxygène dans la zone de calcination,
- au moins une conduite (21) pour évacuer les gaz issus de la zone d'oxychloration comportant au moins un moyen (22) de traitement desdits gaz avant leur évacuation hors de l'installation.

20. Enceinte selon la revendication 19, dans laquelle la conduite (9) comporte au moins un moyen de chauffage du gaz amené dans la zone de contrôle.

21. Enceinte selon la revendication 19 ou 20, dans laquelle sur chaque conduite (30) et (31) est disposé au moins un moyen de chauffage (36,37) du gaz.

22. Enceinte selon l'une des revendications 19 à 20, dans laquelle la conduite (5) comporte au moins un moyen de refroidissement, suivi d'au moins un sécheur, puis d'au moins un moyen de compression.

## Patentansprüche

1. Verfahren zur Regenerierung eines beweglichen Katalysatorbetts zur Reformierung oder Herstellung von aromatischen Kohlenwasserstoffen, wobei der Katalysator einen Träger, wenigstens ein Edelmetall und wenigstens ein Halogen einschließt, wobei das Verfahren eine Verbrennungsstufe mit Behandlung des Katalysators im beweglichen Bett in wenigstens zwei aufeinanderfolgenden Verbrennungszonen, eine Oxychlorierungsstufe und eine Kalzinierungsstufe umfasst, worin
- jede Verbrennungszone von anliegenden Verbrennungszonen derart getrennt ist, dass man den Katalysator passieren lassen und den Übertritt der Gase verhindern kann,
- in jeder Zone der Verbrennungsstufe wenigstens ein sauerstoffhaltiges Gas eingeführt wird und die Gasprodukte jeder Zone extrahiert werden,
- die Stringenz der Betriebsbedingungen in jeder Zone der Verbrennungsstufe mit der Richtung des Katalysatorumlaufs anstiegt,
- für jede Verbrennungszone der Sauerstoffgehalt des eintretenden Gases zwischen 0,01-2% liegt, die Temperatur des eintretenden Gases zwischen 350-600 °C, liegt, die Verweildauer des Katalysators in einer Zone zwischen 5 Minuten-3 Stunden liegt und die PPH zwischen 1-50 h⁻¹ liegt und der Stringenzanstieg der Betriebsbedingungen durch Erhöhung der Temperatur und/oder des Sauerstoffgehalts des eintretenden Gases erhalten wird,
- für die Oxychlorierungsstufe wenigstens ein Chlorierungsreagens, wenigstens ein sauerstoffhaltiges Gas und Wasser derart eingeführt wird, dass das molare Verhältnis H₂O/HCl 1-50 ist, die Oxychlorierungsstufe in Gegenwart eines Oxychlorierungsgases abläuft, das wenigstens 21% Sauerstoff und wenigstens 50 Gew.-ppm Chlor (berechnet als HCI) enthält, und bei einer Temperatur von 350-600 °C abläuft.

2. Verfahren nach Anspruch 1, bei dem für jede Verbrennungszone die Temperatur des eintretenden Gases 400-600°C ist.

3. Verfahren nach einem der vorhergehenden Ansprüche, bei dem das Verhältnis H₂O/HCl 3-50 ist.

4. Verfahren nach einem der vorhergehenden Ansprüche, bei dem das von einer Verbrennungszone extrahierte Gas wenigstens teilweise mit einem evtl. Sauerstoffzusatz in die folgende Zone (in Richtung des Katalysatorumlaufs) geschickt wird.

5. Verfahren nach einem der vorhergehenden Ansprüche, bei dem das von einer Verbrennungszone extrahierte Gas vollständig in die folgende Zone mit einer eventuellen Sauerstoffzufuhr geschickt wird.

6. Verfahren nach einem der vorhergehenden Ansprüche, bei dem die Verbrennungsstufe in einer letzten, Regelung des Verbrennungsendes genannten Zone, beendet wird, in der der Sauerstoffverbrauch näherungsweise kleiner als 10% des in diese Zone eintretenden Sauerstoffs ist.

7. Verfahren nach einem der vorhergehenden Ansprüche, bei dem das in die Oxychlorierungszone eingeführte Gas wenigstens ein Chlorierungsreagens, Wasser und wenigstens ein sauerstoffhaltiges Gas enthält, das einen Teil der aus der Verbrennungsstufe stammenden Gase umfasst, der gewaschen, ggf. getrocknet und mit einem Sauerstoffzusatz versetzt wird.

8. Verfahren nach einem der vorhergehenden Ansprüche, bei dem die Gase aus der Verbrennungsstufe gekühlt werden, behandelt werden, um die Verunreinigungen zu entfernen, getrocknet, komprimiert und dann in zwei Strömen fraktioniert werden; wobei der erste Strom nach Sauerstoffzufuhr und eventuellem Erhitzen in die erste Verbrennungszone geschickt wird, der zweite Strom nach Zufuhr von Sauerstoff, Wasser und Chlorierungsreagens und nach Erhitzen zur Oxychlorierungsstufe geschickt wird, wobei die Gase aus der Oxychlorierung außerhalb der Anlage behandelt und abgezogen werden.

9. Verfahren nach einem der vorhergehenden Ansprüche, das eine Verbrennungsstufe mit Behandlung des Katalysators in einer ersten Verbrennungszone und dann in einer zweiten Verbrennungszone umfasst, in welchem die Zonen derart getrennt sind, dass man den Katalysator passieren lässt und den Durchgang der Gase verhindert, wobei die zweite Verbrennungszone in ihrem unteren Teil eine Zone zur Regelung des Verbrennungsendes umfasst, und das von der ersten Verbrennungszone extrahierte Gas vollständig in die Verbrennungszone nach Sauerstoffzugabe geschickt wird, das Gas aus der zweiten Verbrennungszone gekühlt, zur Eliminierung der Verunreinigungen behandelt, gereinigt, getrocknet, komprimiert und dann in zwei Ströme getrennt wird; wobei der erste Strom nach Sauerstoffzufuhr in die erste Verbrennungszone nach evtl. Erhitzen in der Regelungszone eingeführt wird; und dem zweiten Strom ein trockenes sauerstoffhaltiges Gas zugesetzt wird, das erhitzt und zur Oxychlorierungszone nach Zugabe von Wasser und Chlorierungsreagens geschickt wird.

10. Verfahren nach Anspruch 9, indem der erste Strom in zwei Fraktionen getrennt wird, wobei die eine nach Sauerstoffzufuhr in die erste Verbrennungszone eingeführt wird und die andere mit Sauerstoff versetzt, erhitzt und in die Regelungszone eingeführt wird.

11. Verfahren nach Anspruch 9, bei dem der erste Fluss in zwei Fraktionen getrennt wird, wobei jeder mit Sauerstoff versetzt und vor Einführung erhitzt wird, und zwar für die eine in der ersten Verbrennungszone und für die andere in der Regelungszone.

12. Verfahren nach einem der Ansprüche 7 bis 11, bei dem der zweite erhitzte Strom in zwei Fraktionen getrennt wird, wobei die eine zur Oxychlorierungszone nach Zugabe von Wasser und Chlorierungsreagens geschickt wird und die andere zur Kalzinierungszone geschickt wird.

13. Verfahren nach einem der vorhergehenden Ansprüche, bei dem die Temperatur im wesentlichen in der Regelungszone konstant ist.

14. Verfahren nach einem der vorhergehenden Ansprüche, bei dem die Gase aus der Verbrennung und die Gase aus der Oxychlorierung getrennt extrahiert werden.

15. Verfahren nach einem der vorhergehenden Ansprüche, bei dem das Verfahren in Abwesenheit von einer Rezyklierung des Oxychlorierungsgases arbeitet.

16. Verfahren nach einem der vorhergehenden Ansprüche, bei dem das Gas für die Oxychlorierung in den unteren Teil der Oxychlorierungszone eingeführt wird.

17. Verfahren nach einem der vorhergehenden Ansprüche, bei dem die Kalzinierungsstufe in Gegenwart eines Gases abläuft, das höchstens 21% Sauerstoff und wenigstens 1% Wasser enthält.

18. Verfahren nach einem der vorhergehenden Ansprüche, bei dem in die Kalzinierungszone ein sauerstoffhaltiges Gas eingeführt wird, das Sauerstoff und wenigstens 1 mol% Wasser enthält und einen Teil des Gases aus der Verbrennungsstufe, das gewaschen und getrocknet und mit einem Sauerstoffzusatz versetzt ist, umfasst.

19. Vorrichtung zur Regenerierung eines Katalysators zur Reformierung oder Reduktion von Aromaten, einen Träger, wenigstens ein Edelmetall und wenigstens ein Halogen umfassend, die wenigstens eine Eingangsleitung und eine Ausgangsleitung (4) des Katalysators der Kammer umfasst, wobei der Katalysator in Form eines beweglichen Betts aufeinanderfolgend Zonen zur Verbrennung, Oxychlorierung und Kalzinierung durchquert, wobei die Kammer umfasst:
- wenigstens zwei Verbrennungszonen (A1, A2), die radial in Reihe angeordnet sind, und wobei zwischen den Verbrennungszonen Trennmittel angeordnet sind, die den Durchlauf des Katalysators zwischen diesen Zonen durch die Leitungen zu diesem Zweck ermöglichen, aber den Durchgang der Gase zwischen diesen Zonen verhindern,
- eine Zone (FC) der Regelung des Verbrennungsendes, die in dem unteren Teil der letzten Verbrennungszone angeordnet ist,
- wenigstens eine Leitung (30) zur Einführung von sauerstoffhaltigem Gas in die erste Verbrennungszone, wenigstens eine Leitung (32) für das Abziehen der Gase aus einer Verbrennungszone und für deren Einführung in die folgende Verbrennungszone, wenigstens eine Leitung (31) für die Einführung von sauerstoffhaltigem Gas in die Regelungszone,
- wenigstens eine Leitung (5) zum Abziehen der Gase aus der Verbrennungsstufe aus der Kammer heraus, wobei diese Leitung vor der Oxychlorierungszone angeordnet ist und die Kammer wenigstens ein Mittel zum Kühlen der Gase, wenigstens ein Mittel zur Behandlung dieser Gase zur Entfernung der Verunreinigungen, wenigstens ein Mittel zum Trocknen der Gase und wenigstens ein Mittel für deren Kompression umfasst,
- wenigstens eine Leitung (9) zum Abziehen eines Teils der komprimierten Gase von der Verbrennungszone und die mit den Leitungen (30) und (31) verbunden ist,
- wenigstens eine Leitung (10) zum Abziehen des anderen Teils der komprimierten Gase aus der Verbrennung über diese Leitung verfügt über wenigstens ein Heizmittel (16) der Gase und diese Leitung ist mit wenigstens einer Leitung (17) verbunden, die einen Teil wenigstens dieser Gase in die Oxychlorierungszone führt, wobei diese Leitung (17) mit wenigstens einer Leitung (20) zur Einführung von Wasser und wenigstens einer Leitung (19) zur Einführung von Chlorierungsreagens verbunden ist,
- wenigstens eine Leitung (18) zur Einführung eines sauerstoffhaltigen Gases in die Kalzinierungszone,
- wenigstens eine Leitung (21) zum Abziehen der aus der Oxychchlorierungszone stammenden Gase, die wenigstens ein Mittel (22) zur Behandlung dieser Gase vor deren Abziehen aus der Vorrichtung heraus umfasst.

20. Kammer gemäß Anspruch 19, in der die Leitung 9 wenigstens ein Heizmittel des in die Regelungszone eingeführten Gases umfasst.

21. Kammer nach Anspruch 19 oder 20, auf jeder Leitung (30) und (31) über wenigstens ein Heizmittel des Gases (36,37) angeordnet ist.

22. Kammer nach einem der Ansprüche 19 bis 20, in der die Leitung (5) wenigstens ein Kühlmittel, gefolgt von wenigstens einem Trockner und dann wenigstens einem Kompressionsmittel, umfasst.

## Claims

1. A process for regenerating a moving bed of catalyst for reforming or for aromatic hydrocarbon production, the catalyst comprising a support, at least one noble metal and at least one halogen, the process comprising a combustion step treating the catalyst in a moving bed in at least two successive combustion zones, an oxychlorination step and a calcining step, in which
• each combustion zone is separated from the adjacent combustion zones so as to allow catalyst to pass and to prevent the passage of gases;
• at least one oxygen-containing gas is introduced into each zone of the combustion step, and the gases produced are extracted from each zone;
• the severity of the operating conditions in each zone of the combustion step increases in the direction of flow of the catalyst;
• for each combustion or monitoring and control zone the oxygen content of the inlet gas is in the range 0.01-2%, the temperature of the incoming gas is in the range 350-600°C, the residence time of the catalyst in a zone is in the range 5 minutes to 3 hours and the WHSV is in the range 1-50 h⁻¹, and the increasing severity of the operating conditions is achieved by increasing the temperature and/or the oxygen content of the inlet gas;
• at least one chlorinating agent, at least one oxygen-containing gas, and water are introduced into the oxychlorination step, such that the H₂O/HCl molar ratio is 1 to 50, the oxychlorination step being carried out in the presence of an oxychlorination gas containing less than 21% of oxygen and at least 50 ppm by weight of chlorine (based on HCl), at a temperature of 350-600°C.

2. A process according to claim 1, in which for each combustion zone, the temperature of incoming gas is in the range 400-600°C

3. A process according to any one of the preceding claims, in which the H₂O/HCl molar ratio is in the range 3-50.

4. A process according to any one of the preceding claims, in which at least a portion of the gas extracted from one combustion zone is sent to the following zone (in the direction of catalyst flow) with optional addition of oxygen.

5. A process according to any one of the preceding claims, in which all of the gas extracted from one combustion zone is sent to the following zone with optional addition of oxygen.

6. A process according to any one of the preceding claims, in which the combustion step ends in a last zone, termed a combustion completion control zone, in which the approximate oxygen consumption is less than 10% of the oxygen entering said zone.

7. A process according to any one of the preceding claims, in which the gas introduced in the oxychlorination zone contains at least a chlorinating agent, water and at least an oxygen-containing gas which comprises a portion of the gases from the combustion step, washed, optionally dried, and with additional makeup oxygen.

8. A process according to any one of the preceding claims, in which the gases from the combustion step are cooled, treated to eliminate impurities, dried, compressed then fractionated into two streams; after adding oxygen and possible re-heating, the first stream is sent to the first combustion zone, and after adding oxygen, water and chlorinating agent, and after heating, the second stream is sent to the oxychlorination step, and the gases from the oxychlorination step are treated and evacuated from the unit.

9. A process according to any one of the preceding claims, comprising a combustion step treating the catalyst in a first combustion zone then in a second combustion zone, in which the zones are separated so as to allow the catalyst to pass and to prevent the passage of gas, the second combustion zone comprising in its lower portion a zone for monitoring and controlling combustion completion, and all of the gas extracted from the first combustion zone is sent to the second combustion zone after adding oxygen, the gas from the second combustion zone is cooled, treated to eliminate impurities, purged, dried, compressed then separated into two streams; after adding oxygen, the first stream is introduced into the first combustion zone and after optional re-heating in the monitoring and control zone; the second stream is added to a re-heated dry oxygen-containing gas and sent to the oxychlorination zone after adding water and a chlorinating agent.

10. A process according to claim 9, in which the first stream is separated into two fractions, one being introduced into the first combustion zone after adding oxygen, and the other being introduced into the monitoring and control zone after adding oxygen and re-heating.

11. A process according to claim 9, in which the first stream is separated into two fractions, each having oxygen added and being re-heated before introducing one fraction into the first combustion zone and the other into the monitoring and control zone.

12. A process according to any one of claims 7 to 11, in which the second re-heated stream is separated into two fractions, one being sent to an oxychlorination zone after adding water and chlorinating agent, the other being sent to the calcining zone.

13. A process according to any one of the preceding claims, in which the temperature in the monitoring and control zone is substantially constant.

14. A process according to any one of the preceding claims, in which the gases from combustion and the gases from oxychlorination are separately extracted.

15. A process according to any one of the preceding claims, in which the process operates without recycle of the oxychlorination gas.

16. A process according to any one of the preceding claims, in which the gas for oxychlorination is introduced in the lower part of oxychlorination zone.

17. A process according to any one of the preceding claims, in which the calcining step is carried out in the presence of a gas containing at most 21% of oxygen and less than 1% of water.

18. A process according to any one of the preceding claims, in which in the calcination zone is introduced an oxygen-containing gas and less than 1%mol-water, which comprises a portion of the gases from the combustion step, washed and dried and makeup oxygen added.

19. A unit for regenerating a reforming or aromatic compound production catalyst comprising a support, at least one noble metal and at least one halogen, comprising at least one inlet conduit and an outlet conduit (4) for the catalyst to leave the vessel, said catalyst successively traversing combustion, oxychlorination and calcining zones in a moving bed, said vessel comprising:
• at least two radial combustion zones (A1, A2) disposed in series, and between the combustion zones are disposed separating means allowing passage of catalyst between said zones in the conduits but preventing passage of gas between said zones;
• a zone (FC) for monitoring and controlling combustion completion located in the lower portion of the last combustion zone;
• at least one conduit (30) for introducing oxygen-containing gas into the first combustion zone, at least one conduit (32) for evacuating gases from one combustion zone and introducing them into the following combustion zone, at least one conduit (31) for introducing oxygen-containing gas into the control and monitoring zone;
• at least one conduit (5) for evacuating gas from the combustion step outside the vessel, said conduit being located upstream of the oxychlorination zone, and the vessel comprising at least one means for cooling the gases, at least one means for treating said gases to eliminate impurities, at least one means for drying the gases, and at least one means for compressing the gases;
• at least one conduit (9) for evacuating a portion of the compressed gases from the combustion step connected to conduits (30) and (31);
• at least one conduit (10) for evacuating the other portion of the compressed gases from the combustion step; at least one means (16) for heating gases being located in this conduit, and said conduit is connected to at least one conduit (17) which supplies at least a portion of said gases to the oxychlorination zone, said conduit (17) being connected to at least one conduit (20) for introducing water and to at least one conduit (19) for introducing a chlorinating agent;
• at least one conduit (18) for introducing an oxygen-containing gas into the calcining zone;
• at least one conduit (21) for evacuating gas from the oxychlorination zone comprising at least one means (22) for treating said gases before their evacuation from the unit.

20. A vessel according to claim 19, in which conduit (9) comprises at least one means for heating the gas supplied to the monitoring and controlling zone.

21. A vessel according to claim 19 or claim 20, in which at least one gas heating means (36, 37) is located in each conduit (30) and (31).

22. A vessel according to claim 19 to claim 20, in which conduit (5) comprises at least one cooling means, followed by at least one drier, then at least one compression means.
